# EUROPEAN PATENT APPLICATION

(11) **EP 2 958 176 A1**
(43) Date of publication of application: **23.12.2015**
(21) Application number: 13875177.1
(22) Date of filing: 25.06.2013
(51) Int. Cl.: H01M 8/18

(54) **HIGH-CONCENTRATION VANADIUM ELECTROLYTE, AND METHOD AND APPARATUS FOR PRODUCING SAME**

(30) Priority: 18.02.2013 JP 2013029452
(71) Applicant: Galaxy Co., Ltd., Tokyo 102-0085 (JP)
(72) Inventor: UTSUMI, Kenichi, Zama-shi Kanagawa 228-0001 (JP)
(74) Representative: Klunker . Schmitt-Nilson . Hirsch
(86) International application number: PCT/JP2013/067340
(87) International publication number: WO 2014/125662

(57) **Abstract**

Provided is a high-concentration vanadium electrolytic solution containing a high concentration of vanadium ions, which could not conventionally be prepared, and which can be used in a circulation-type redox flow battery or a non-circulation-type redox non-flow battery and in which sludge is unlikely to be generated, and a method and a device for producing the same. To solve the above-discussed problems, the vanadium electrolytic solution which is a sulfuric acid solution, includes vanadium ions in the range of from over 1.7 mol/L to 3.5 mol/L. The vanadium electrolytic solution is a second solution itself or a second solution prepared by adding preparation water or preparation sulfuric acid to a first solution in order to adjust to a final total volume of the vanadium electrolytic solution, the first solution being prepared by mixing the vanadium salt with preparation water in order to dissolve the vanadium salt and a second solution being prepared by adding sulfuric acid to the first solution while pre-electrolyzing the first solution.

## Description

### Field of the Invention

The present invention relates to a high-concentration vanadium electrolytic solution containing a high concentration of vanadium ions, and to a method and a device for producing the same. In particular, the present invention relates to a high-concentration vanadium electrolytic solution containing a high concentration of vanadium ions, which could not conventionally be prepared, and which can be used in a circulation-type redox flow battery or a non-circulation-type redox non-flow battery and in which sludge is unlikely to be generated, and to a method and a device for producing the same.

### Background Art

Secondary batteries have drawn attention as an energy storage source with a small environmental load that is capable of repeated charging and discharging. As for industrial secondary batteries, lead batteries, sodium-sulfur batteries, redox flow batteries or the like are known. Among these, redox flow batteries using a vanadium electrolytic solution operate at room temperature and the active materials thereof are liquid and, thus, can be stored in an external bath. Accordingly, such redox flow batteries can be easily made large in size and possess advantages such as easier regeneration and longer life than other secondary battery electrolytes.

A redox flow battery is a secondary battery that makes use of an electrolysis cell in which an anode (positive electrode) and a cathode (negative electrode) are separated by means of an ion exchange membrane, and in which charging and discharging are performed, after placing a vanadium ion solution with a different valence to a corresponding electrolysis cell part, through valence change of vanadium ions while such vanadium ion solutions circulate within the electrolysis cell. The chemical reactions due to charging and discharging are as expressed in the following formulae. At the positive electrode, the charge-discharge reaction according to formula (1) occurs, and at the negative electrode, the charge-discharge reaction according to formula (2) occurs. It should be noted that in formulae (1) and (2), at the time of discharging, the reaction occurs from the right-hand side to the left-hand side and at the time of charging, the reaction occurs from the left-hand side to the right-hand side.

[Chemical formula 1]

(Positive electrode) VO²⁺(quadrivalent)+H₂O ⇆ VO²⁺(pentavalent)+2H⁺+e (1)

(Negative electrode) V³⁺(trivalent)+e^{.} ⇆ V²⁺(bivalent) (2)

In terms of a vanadium electrolytic solution used in redox flow batteries, generally, vanadium oxide sulfate (VOSO₄ · nH₂O) salt is dissolved in a sulfuric acid solution to prepare a quadrivalent vanadium ion solution, and then, such vanadium ion solution is electrolyzed so as to obtain vanadium ion solutions with different valences. In particular, for example, as in Patent Document 1, on the anode side, a solution containing pentavalent vanadium ions (VO₂⁺), which are anode active materials, is prepared through the oxidation reaction of quadrivalent vanadium ions and on the cathode side, a solution containing bivalent vanadium ions (V²⁺), which are cathode active materials, is prepared through the reduction reaction of quadrivalent vanadium ions.

It should be noted that various prior art techniques have been reported regarding the vanadium electrolytic solution used in redox flow batteries. However, there existed problems to the effect that the stability in the sulfuric acid solution differs depending on the valence of the vanadium ions and that sludge such as vanadium oxide or the like is generated due to oxidation of vanadium ions. In addition, when the vanadium ion concentration is increased, vanadium salt cannot be easily dissolved in the sulfuric acid solution and therefore precipitates therein. Accordingly, there also existed problems to the effect that such precipitated vanadium salt gets jammed within the electrolysis cell and thus prevents the operation of the battery. In order to address such problems, for example, in Patent Document 2, a technique is proposed in which a protective colloid agent, an oxo acid, a complexing agent or the like is added to the sulfuric acid solution containing vanadium ions and/or vanadyl ions so as to prevent precipitation of the vanadium salt within the solution.

### Prior Art References

### Patent Documents

Patent Document 1: JP2002-367657 A
Patent Document 2: JP08-064223 A

### Summary of the Invention

### Problems to be Solved by the Invention

A vanadium electrolytic solution is preferable since the higher the concentration of the vanadium ions contained therein, the higher the energy density, and thus, the higher the charge-discharge efficiency. Accordingly, research has been conducted so as to obtain a vanadium electrolytic solution with a high vanadium ion concentration.

The embodiment in Patent Document 1 describes a vanadium electrolytic solution in which the vanadium ion concentration is in the range of from 1 to 2.5 mol/L. The claims thereof describe a vanadium electrolytic solution in which the vanadium ion concentration is in the range of from 1 to 3 mol/L. The embodiment in Patent Document 2 describes a vanadium electrolytic solution in which the vanadium ion concentration is 2 mol/L. The claims thereof describe a vanadium electrolytic solution in which the vanadium ion concentration is in the range of from 1 to 3 mol/L.

However, heretofore, only a vanadium electrolytic solution in which the vanadium ion concentration is 1.7 mol/L or less has been used in practice, and there has not yet been any vanadium electrolytic solution used in which the vanadium ion concentration exceeds 1.7 mol/L. The reason thereof is, because of the solubility limit of vanadium oxide sulfate salt with respect to the sulfuric acid solution, vanadium salt is precipitated and thus, it has been impossible to dissolve vanadium salt within the sulfuric acid solution such that the vanadium ion concentration exceeds 1.7 mol/L. Therefore, a vanadium electrolytic solution in which the vanadium ion concentration exceeds 1.7 mol/L did not, in reality, exist.

The present invention has been made in order to solve the problems above and an object thereof is to provide a high-energy density and high-concentration vanadium electrolytic solution containing a high concentration of vanadium ions, which could not conventionally be prepared, and which can be used in a circulation-type redox flow battery or a non-circulation-type redox non-flow battery and in which sludge is unlikely to be generated. In addition, another object of the present invention is to provide a method and a device for producing such high-concentration vanadium electrolytic solution.

### Means for Solving the Problems

(1) To solve the above-discussed problems, the vanadium electrolytic solution which is a sulfuric acid solution, includes vanadium ions in the range of from over 1.7 mol/L to 3.5 mol/L.
   According to the present invention, a non-conventional high-concentration vanadium ion electrolyte can be provided, which contains vanadium ions within the range of from over 1.7 mol/L, which is higher than the solubility limit of vanadium oxide sulfate salt with respect to the sulfuric acid solution, to 3.5 mol/L. Such vanadium electrolytic solution is prepared without precipitating vanadium salt. In addition, with such vanadium electrolytic solution, the generation of sludge such as vanadium oxide or the like can be suppressed even during the oxidation reaction (charging) at an anode. As a result, a stable high-concentration vanadium electrolytic solution having a high energy density and a high charge-discharge efficiency can be provided.
(2) The vanadium electrolytic solution according to the present invention, the vanadium ions are preferably quadrivalent or pentavalent vanadium ions. The vanadium ions including the quadrivalent or pentavalent vanadium ions is used as a vanadium electrolytic solution for an anode, and with the vanadium electrolytic solution, the generation of sludge such as vanadium oxide or the like can be suppressed even during the oxidation reaction (charging) at an anode.
(3) In the vanadium electrolytic solution according to the present invention, preferably (A) the concentration of dissolved oxygen is 5 ppm or less, (B) vanadium oxide sulfate (VOSO₄ · nH₂O) is used as vanadium salt, the vanadium oxide sulfate containing one or more elements among aluminum, calcium, sodium, potassium, iron, silicon and chromium in a total amount of less than 0.4 mass%, or (C) an additive is contained, the additive being used to suppress generation of precipitate or sludge.
   According to the invention of (A), the generation of sludge such as vanadium oxide or the like can be further suppressed. In addition, even when the vanadium electrolytic solution is stored at room temperature or at temperatures above room temperature, the generation of sludge such as vanadium oxide or the like can be suppressed. In a similar manner, the inventions of (B) and (C) can even further suppress the generation of sludge such as vanadium oxide or the like in the above-described situations.
(4) The vanadium electrolytic solution according to the present invention, is preferably the second solution itself or the second solution prepared by adding preparation water or preparation sulfuric acid to the first solution in order to adjust to a final total volume of the vanadium electrolytic solution, the first solution being prepared by mixing the vanadium salt with preparation water in order to dissolve the vanadium salt and a second solution being prepared by adding sulfuric acid to the first solution while pre-electrolyzing the first solution.
(5) In the vanadium electrolytic solution according to the present invention, the pre-electrolysis is preferably constant-current electrolysis or potentiostatic electrolysis.
(6) In the vanadium electrolytic solution according to the present invention, the electrode potential of the pre-electrolysis (reference electrode: a silver-silver chloride electrode) at the time of starting to add the sulfuric acid is preferably within the range of from 800 mV to 950 mV, inclusive when the vanadium electrolytic solution for an anode is prepared and electrolysis for the oxidation is performed.
(7) To solve the above-discussed problems, the method for producing a vanadium electrolytic solution according to the present invention, contains vanadium ions in the range of from over 1.7 mol/L to 3.5 mol/L, the method includes: preparing a first solution by mixing vanadium salt with preparation water, in order to dissolve the vanadium salt; and preparing a second solution by adding sulfuric acid to the first solution while pre-electrolyzing the first solution.
   It should be noted that the vanadium electrolytic solution to be used is: the second solution itself when the second solution is prepared so as to have a final target fluid volume; or is the second solution prepared by adding preparation water or preparation sulfuric acid thereto so that the volume thereof is adjusted to be a final total volume when the second solution is not prepared so as to have a final target fluid volume.
(8) In the method for producing a vanadium electrolytic solution according to the present invention, preferably (a) the concentration of dissolved oxygen that is 5 ppm or less, (b) vanadium oxide sulfate (VOSO₄ · nH₂O) that is used as vanadium salt, the vanadium oxide sulfate containing one or more elements among aluminum, calcium, sodium, potassium, iron, silicon and chromium in a total amount of less than 0.4 mass%, or (c) an additive that is contained, the additive being used to suppress generation of precipitate or sludge.
(9) In the method for producing a vanadium electrolytic solution according to the present invention, the pre-electrolysis is preferably constant-current electrolysis or potentiostatic electrolysis.
(10) In the method for producing a vanadium electrolytic solution according to the present invention, the electrode potential of the pre-electrolysis (reference electrode: a silver-silver chloride electrode) at the time of starting to add the sulfuric acid is preferably within the range of from 800 mV to 950 mV, inclusive when the vanadium electrolytic solution for an anode is prepared and electrolysis for the oxidation is performed.
(11) To solve the above-discussed problems, the device for producing a vanadium electrolytic solution containing vanadium ions in the range of from over 1.7 mol/L to 3.5 mol/L according to the present invention, has: a solution bath in which a first solution is prepared by mixing vanadium salt with preparation water in order to dissolve the vanadium salt and a second solution is prepared by adding sulfuric acid to the first solution while pre-electrolyzing the first solution, and which has the second solution itself as the vanadium electrolytic solution or the second solution prepared by adding preparation water or preparation sulfuric acid to the second solution in order to adjust the volume thereof to be a final total volume as the vanadium electrolytic solution; and a pre-electrolysis device that is for pre-electrolyzing the first solution.

### Effect of the Invention

According to the present invention, a high-energy density and high-concentration vanadium electrolytic solution can be provided, which contains a high concentration of vanadium ions, which could not conventionally be prepared, which can be used in a circulation-type redox flow battery or a non-circulation-type redox non-flow battery, and in which sludge is unlikely to be generated.

In addition, according to the present invention, a high-concentration vanadium electrolytic solution can be provided, which can be used in a circulation-type redox flow battery or a non-circulation-type redox non-flow battery that uses a vanadium ion solution as an electrolyte, in which precipitate that is likely to be generated during preparation and sludge that is likely to be generated during charging can be both suppressed and in which a charge efficiency can be improved, and also a method and a device for producing the same can be provided.

The vanadium electrolytic solution thus obtained is an electrolyte containing vanadium ions within the range of from over 1.7 mol/L, which is higher than the solubility limit of vanadium oxide sulfate salt with respect to the sulfuric acid solution, to 3.5 mol/L. However, no vanadium salt is precipitated. In addition, the generation of sludge such as vanadium oxide or the like can also be suppressed through the oxidation reaction during charging the vanadium electrolytic solution. As a result, a stable high-concentration vanadium electrolytic solution having a high energy density and a high charge-discharge efficiency can be provided.

### Brief Descriptions of the Drawings

Fig. 1 is a flowchart illustrating an example of a method for preparing a high-concentration vanadium electrolytic solution according to the present invention.
Fig. 2 is a flow diagram illustrating an example of a device for producing a high-concentration vanadium electrolytic solution according to the present invention.

### Embodiments of the Invention

A high-concentration vanadium electrolytic solution according to the present invention, and a method and a device for producing the same will be described with reference to the drawings. It should be noted that the technical scope of the present invention is not limited to the following description of the embodiments or the drawings, as long as it includes the gist of the present invention.

### [High-concentration vanadium electrolytic solution and method for producing the same]

The high-concentration vanadium electrolytic solution according to the present invention (which, hereinafter, may also be simply referred to as a "vanadium electrolytic solution") is a sulfuric acid solution containing vanadium ions in the range of from over 1.7 mol/L to 3.5 mol/L. When the vanadium ion is a quadrivalent or pentavalent vanadium ion, the vanadium electrolytic solution is used as a vanadium electrolytic solution for an anode and when the vanadium ion is a bivalent to quadrivalent vanadium ion, the vanadium electrolytic solution is used as a vanadium electrolytic solution for a cathode. In particular, even when the high-concentration vanadium electrolytic solution according to the present invention is used as the vanadium electrolytic solution for the anode, which is subject to generating sludge through the oxidation reaction during charging, such sludge is unlikely to be generated. In addition, as will be described in the section hereinafter for describing the method for producing a high-concentration vanadium electrolytic solution, the vanadium electrolytic solution does not generate precipitate during preparation.

Such high-concentration vanadium electrolytic solution is an electrolyte that contains vanadium ions in the range of from over 1.7 mol/L, which is higher than the solubility limit of vanadium oxide sulfate salt with respect to the sulfuric acid solution, to 3.5 mol/L. An electrolyte having such a high vanadium ion concentration has heretofore only been described in the prior art documents and has neither been prepared in reality nor been present in the market. In addition, in a high-concentration vanadium electrolytic solution according to the present invention, no precipitation of vanadium salt occurs during preparation, as it used to, even when oversaturation is reached and the generation of sludge such as vanadium oxide or the like, which is likely to be generated due to the oxidation reaction during charging, can be suppressed, and thus, it is preferably used as an electrolyte for an anode.

### <Electrolyte composition>

### (Vanadium ion concentration)

The vanadium ion concentration in the vanadium electrolytic solution is in the range of from over 1.7 mol/L to 3.5 mol/L. The vanadium electrolytic solution having a vanadium ion concentration in this range becomes a high-concentration vanadium electrolytic solution in which the energy density thereof is high and charging/discharging is efficient. The high-concentration vanadium electrolytic solution according to the present invention has such high vanadium ion concentration; however, as will be described below, vanadium salt does not precipitate during preparation thereof.

When the vanadium ion concentration is 1.7 mol/L or less, an electrolyte with such concentration cannot be said to be a vanadium electrolytic solution in which the energy density thereof is sufficiently high and the current density thereof during discharging is sufficiently increased, as compared to the high-concentration vanadium electrolytic solution according to the present invention, and it cannot be said that such electrolyte has sufficiently answered the demand for a high-performance electrolyte for redox batteries. In addition, in a vanadium electrolytic solution in which the vanadium ion concentration exceeds 3.5 mol/L, even with the method for producing a high-concentration vanadium electrolytic solution according to the present invention, which will be described below, the oversaturation limit is easily reached and thus, such electrolyte is difficult to produce.

A particularly preferable vanadium ion concentration is in the range of from 2.5 mol/L to 3.5 mol/L, inclusive. The vanadium electrolytic solution with a vanadium ion concentration within this range can supply a sufficient amount of ions to the electrodes, and thus, the energy density thereof is significantly high, and accordingly, it can particularly and preferably be used as an electrolyte for a circulation-type flow battery and an electrolyte for a non-circulation-type non-flow battery. It should be noted that the vanadium ion concentration in the vanadium electrolytic solution may be determined from the result obtained by means of X-ray florescent analysis, ion chromatography, ICP mass spectrometry, atomic absorption spectrophotometry or the like.

### (Sulfuric acid concentration)

The sulfuric acid concentration is preferably in the range of from 0.5 mol/L to 4 mol/L, inclusive. For conditioning the sulfuric acid concentration to be within this range, the electrical conductivity, viscosity, stability, vanadium ion concentration, solubility of vanadium salt and the like of the vanadium electrolytic solution are considered. By making the sulfuric acid concentration be within this range, the electrical conductivity of the vanadium electrolytic solution can be increased and thus, the charge-discharge efficiency can be improved.

When the sulfuric acid concentration is less than 0.5 mol/L, the electrical conductivity cannot be sufficiently increased, and the solubility of the vanadium oxide sulfate hydrate may become insufficient. On the other hand, when the sulfuric acid concentration exceeds 4 mol/L, since a large amount of sulfuric acid needs to be added during preparation of the vanadium electrolytic solution, as will be described below, the original amount of preparation water becomes small and thus, a large amount of vanadium salt cannot be dissolved in water. As a consequence, it is difficult to obtain a high-concentration vanadium electrolytic solution with a vanadium ion concentration exceeding 1.7 mol/L. The sulfuric acid concentration in the vanadium electrolytic solution is preferably in the range of from 2.5 mol/L to 4.0 mol/L, inclusive, or more preferably in the range of from 2.5 mol/L to 3.5 mol/L, inclusive, from the viewpoint of high electrical conductivity and high vanadium ion concentration.

### (Dissolved oxygen)

The concentration of the oxygen dissolved in the vanadium electrolytic solution is preferably 5 ppm or less, more preferably 1 ppm or less and most preferably 0.5 ppm or less. By making the dissolved oxygen concentration be 5 ppm or less, the generation of sludge such as vanadium peroxide, vanadium oxide or the like derived from such dissolved oxygen can be suppressed. In addition, by making the dissolved oxygen concentration be 1 ppm or less, in particular, 0.5 ppm or less, the generation of sludge can be even further suppressed.

Moreover, the vanadium electrolytic solution containing the dissolved oxygen within the above range has an advantage to the effect that problems such as the generation of sludge, such as vanadium peroxide, vanadium oxide or the like, and a drop in current efficiency due to the oxidation reaction by the dissolved oxygen, are unlikely to occur in any of the below-described pre-electrolysis process, electrolysis process and charging/discharging of the secondary battery.

On the other hand, when the dissolved oxygen concentration exceeds 5 ppm, the generation of sludge derived from such dissolved oxygen is likely to occur. Such generation of sludge is likely to occur at the time of, in particular, electrolysis for oxidation of the vanadium electrolytic solution, electrolysis for charging, or charging/discharging of the secondary battery. On the anode side, the peroxidation condition leads to the easy generation of sludge, such as vanadium peroxide, vanadium oxide or the like, and on the cathode side, the oxidation reaction by the dissolved oxygen leads to the easy generation of a drop in current efficiency. Thus, an imbalance in oxidation-reduction reaction between the anode and the cathode leads to the easy generation of sludge. It should be noted, however, that when the dissolved oxygen concentration is preferably 1 ppm or less, in particular, more preferably 0.5 ppm or less, the above-described generation of sludge, such as vanadium peroxide, vanadium oxide or the like, and a drop in current efficiency due to the oxidation reaction by the dissolved oxygen are even further suppressed.

In order to make the dissolved oxygen concentration in the vanadium electrolytic solution be within the above range, the preparation work including dissolution, agitation or the like is preferably performed in an inert gas atmosphere. Examples of inert gases include nitrogen gas, argon gas or the like. It should be noted that the dissolved oxygen concentration is the result measured by means of a diaphragm-type dissolved oxygen meter.

The method for removing the dissolved oxygen is not particularly limited, as long as it is a means for removing as much of the dissolved oxygen from the solution as possible and various methods may be applied. Examples of such methods include a reduced-pressure deaerating method in which the dissolved oxygen in the solution is removed by reducing the pressure inside the air-tight container, a bubbling deaerating method in which the dissolved oxygen in the solution is removed by providing bubbles of inert gas from a nozzle introduced into the solution, a deaerating membrane method in which the dissolved oxygen in the solution is removed using a deaerating membrane, and the like. Such various deaerating methods may be applied to each of water, sulfuric acid, a first solution, a second solution and the vanadium electrolytic solution. In addition, at the time of storing the respective solutions or the electrolyte, agitation during solution preparation, pre-electrolysis or electrolysis (described below), or charging-discharging a flow-type battery, it is preferable for a deaerating method to be performed in combination during circulation. In this way, an increase in amount of the dissolved oxygen due to inclusion of air can be prevented.

### (Additive)

The vanadium electrolytic solution may contain an additive for preventing the generation of precipitate or sludge. Various additives may be provided as such additive and it is not particularly limited. Inclusion of an additive in the vanadium electrolytic solution allows for the generation of sludge, which is likely to be generated at the time of charging-discharging of the vanadium electrolytic solution, to be suppressed. In addition, such additive may suppress the generation of precipitate or sludge at any of the time of preparing the vanadium electrolytic solution, the time of storing the same at room temperature or the time of storing the same at temperatures above room temperature.

Examples of such additive include a compound having a hydroxyl group, a surfactant and a specific inorganic salt. Such additive is preferably added in an amount within the above-described function effect range of the additive.

Examples of the compound having a hydroxyl group include: citric acid; trishydroxylmethylaminomethane (THAM or tris); inositol (1, 2, 3, 4, 5, 6-cyclohexanehexol); phytic acid (IP6); glycerol (1, 2, 3-propanetriol); sorbitol; organic acid or the like. It should be noted that examples of the organic acid include organic acids having a carboxyl group (-COOH), a sulfo group (-SO₃H), a hydroxy group, a thiol group and enol as the characteristic group. It should further be noted that compounds other than the above may also be used, as long as they achieve a similar effect to the above.

Examples of the surfactant include surfactants such as hexadecyltrimethylammonium bromide (cetyltrimethylammonium bromide, CTAB), sodium lignin sulfonate or the like. It should be noted that surfactants other than the above may also be used, as long as they achieve a similar effect to the above.

Examples of the inorganic salt include inorganic salts such as potassium sulfate, sodium hexametaphosphate or the like. It should be noted that inorganic salts other than the above may also be used, as long as they achieve a similar effect to the above.

These additives interact with the vanadium ions in the vanadium electrolytic solution. For example, they act as a complexing agent, a chelating agent or the like, and as a result, the generation of vanadium or a vanadium compound, as precipitate or sludge, can be suppressed in the vanadium electrolytic solution. The type of the additive to be used is selected within the scope of the purpose thereof and the amount to be added is preset and added accordingly.

It should be noted that the above-described additives are easy to handle and thus, there is no difficulty during work. However, for example, halides such as chloride, bromide or the like may have corrosive properties that may corrode members of an electrolysis stack, a pre-electrolysis device or the like, or that may corrode the devices themselves, or they may be difficult to manage or handle. Thus, it is preferable for additives such as such halides or the like not to be contained.

### (Impurity element)

The vanadium electrolytic solution may contain impurities included in the vanadium salt which is used during solution preparation. Such impurities may include one or more elements out of: aluminum; calcium; sodium; potassium; iron; silicon and chromium. The content of such impurities is preferably small from the viewpoint of suppressing the generation of sludge or the like. For example, the content is preferably in the total amount of less than 0.4 mass%. In addition, a minute amount (for example, approximately 0.05 mass% or less) of inevitable impurities other than the above may be contained.

When the content of the impurity elements is in a total amount of less than 0.4 mass%, even when the vanadium electrolytic solution is used in the secondary battery and the charging and discharging thereof are repeated, the generation of sludge derived from such impurities can be prevented. On the other hand, when the content thereof is in a total amount of 0.4 mass% or more, when the vanadium electrolytic solution is used in the secondary battery and the charging and discharging thereof are repeated, the generation of sludge derived from such impurities may occur. It should be noted that the impurity elements cannot be completely removed and, generally, the impurity elements are contained in at least the amount of approximately 0.1 mass% or less, or approximately 0.05 mass% or less. The content of the impurity elements contained in the vanadium electrolytic solution may be determined from the result obtained by means of atomic absorption spectrophotometry, X-ray florescent analysis, ion chromatography, ICP mass spectrometry, or the like.

### (Prepared vanadium electrolytic solution)

The vanadium electrolytic solution having the above-described composition is prepared by: (a) preparing a first solution by mixing vanadium salt and preparation water so that the vanadium salt is dissolved therein; and (b) preparing a second solution by adding sulfuric acid to the first solution while pre-electrolyzing the first solution, wherein (c1) when the second solution is prepared so as to have a final target fluid volume, the vanadium electrolytic solution is the second solution itself, or (c2) when the second solution is not prepared so as to have a final target fluid volume, the vanadium electrolytic solution is the second solution prepared by adding preparation water or preparation sulfuric acid thereto so that the volume thereof is adjusted to be a final total volume.

In particular, the prepared vanadium electrolytic solution is a vanadium electrolytic solution containing vanadium ions in the range of from over 1.7 mol/L to 3.5 mol/L, and it may be a vanadium electrolytic solution for an anode or a vanadium electrolytic solution for a cathode. Such high-concentration vanadium electrolytic solution is a high-energy density vanadium electrolytic solution containing a high concentration of vanadium ions, which could not conventionally be prepared, and which can be used in a circulation-type redox flow battery or a non-circulation-type redox non-flow battery and in which sludge is unlikely to be generated. The prepared vanadium electrolytic solution can be used in a circulation-type redox flow battery or a non-circulation-type redox non-flow battery, and is capable of suppressing precipitate, which is likely to be generated during preparation, as well as sludge, which is likely to be generated during charging, and thus, is capable of improving charging efficiency.

The high-concentration vanadium electrolytic solution according to the present invention may preferably be used as a vanadium electrolytic solution for an anode, which has a tendency of generating sludge during charging by the oxidation reaction; however, it can also be used as a vanadium electrolytic solution for a cathode.

### (Vanadium salt)

As for vanadium salt for preparing the high-concentration vanadium electrolytic solution according to the present invention, vanadium oxide sulfate hydrate is generally used. The purity of the vanadium oxide sulfate hydrate is not particularly limited; however, from the viewpoint of suppressing the generation of sludge or the like, it should be 99.5 mass% or more, as shown in Table 1, and a hydrate in which the total amount of one or more impurity compounds selected from: aluminum oxide; calcium oxide; sodium oxide; potassium oxide; iron oxide; silicon oxide and chromium oxide, is less than 0.5 mass% is preferably used. The reason why the impurity concentration (0.5 mass%) in the vanadium salt and the impurity concentration (0.4 mass%) in the above-described vanadium electrolytic solution differ is because the impurity compounds in the vanadium salt configure the oxides. For such vanadium oxide sulfate hydrate, a commercially available hydrate may be purchased and used, or a vanadium oxide sulfate hydrate with somewhat low impurity may be purified through operations such as recrystallization, filtration, distillation or the like and then used. It should be noted that the identification and content of the impurity compounds contained in the vanadium oxide sulfate hydrate may be determined from the result obtained by means of X-ray florescent analysis, ion chromatography, ICP mass spectrometry or the like.

**[Table 1]**

| Substance name | Content (mass%) |
|---|---|
| VOSO₄ · nH₂O | ≥ 99.5 |
| Al₂O₃ | ≤ 0.004 |
| CaO | ≤ 0.05 |
| Na₂O | ≤ 0.05 |
| K₂O | |
| Fe₂O₃ | ≤ 0.02 |
| SiO₂ | ≤ 0.1 |
| Cr₂O₃ | ≤ 0.004 |

The impurity elements in Table 1 are the impurities contained in the vanadium salt. Therefore, even when sodium, potassium or the like is contained in, for example, the above-described additive, as long as such impurities do not significantly influence the generation of sludge in the vanadium electrolytic solution, such impurities or the like may be contained to such an extent that they do not influence the generation of such sludge or the like.

### (Sulfuric acid and water)

For sulfuric acid, concentrated sulfuric acid such as commercially available industrial sulfuric acid or the like may be used, and for water, ultrapure water, pure water, distilled water, ion-exchange water or the like may preferably be used.

### [Method and device for producing high-concentration vanadium electrolytic solution]

Next, a method and a device for producing the above-described high-concentration vanadium electrolytic solution according to the present invention will be described.

### <Method and basic configuration of device>

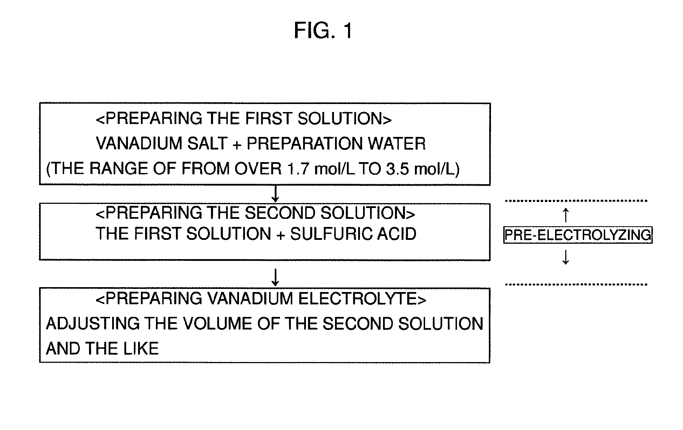

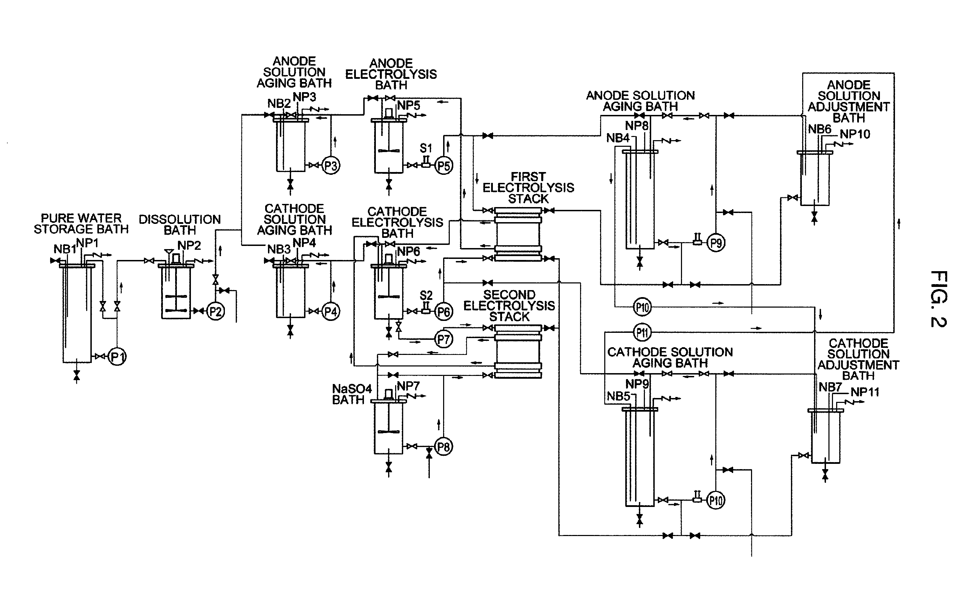

The method for producing the high-concentration vanadium electrolytic solution according to the present invention is, as shown in Fig. 1 and Fig. 2, a method for producing a vanadium electrolytic solution containing vanadium ions in the range of from over 1.7 mol/L to 3.5 mol/L. Such method includes a step of preparing a first solution by mixing vanadium salt and preparation water so that the vanadium salt is dissolved therein and a step of preparing a second solution by adding sulfuric acid to the first solution while pre-electrolyzing the first solution. The vanadium electrolytic solution to be used is the second solution itself when the second solution is prepared so as to have a final target fluid volume, or the second solution prepared by adding preparation water or preparation sulfuric acid thereto so that the volume thereof is adjusted to be a final total volume when the second solution is not prepared so as to have a final target fluid volume.

The device for producing a vanadium electrolytic solution according to the present invention is, as shown in Fig. 2, a device for producing a vanadium electrolytic solution containing vanadium ions in the range of from over 1.7 mol/L to 3.5 mol/L. In such device, a first solution is prepared by mixing vanadium salt and preparation water so that the vanadium salt is dissolved therein, and a second solution is prepared by adding sulfuric acid to the first solution while pre-electrolyzing the first solution. Such device is provided with, at least: a solution bath in which the second solution itself is contained as the vanadium electrolytic solution or the second solution prepared by adding preparation water or preparation sulfuric acid thereto so that the volume thereof is adjusted to be a final total volume is contained as the vanadium electrolytic solution; and a pre-electrolysis device for pre-electrolyzing the first solution.

A detailed description of the configuration of the device shown in Fig. 2 will be provided herein. The above-described "solution bath" corresponds to an "aging bath" (i.e. an "anode solution aging bath" or a "cathode solution aging bath") in Fig. 2 and is a bath for containing the finally prepared vanadium electrolytic solution. In addition, the "pre-electrolysis device" corresponds to a device including a "first electrolysis stack" and a "second electrolysis stack" in Fig. 2.

More specifically, the production device illustrated in Fig. 2 is provided with, at least: a "dissolution bath" for preparing a first solution by mixing vanadium salt and preparation water so that the vanadium salt is dissolved therein; an electrolysis bath (i.e. an "anode electrolysis bath" or a "cathode electrolysis bath") for preparing a second solution by adding sulfuric acid to the first solution while pre-electrolyzing the prepared first solution; and an aging bath (i.e. an "anode solution aging bath" or a "cathode solution aging bath") for preparing the vanadium electrolytic solution by adding preparation water or preparation sulfuric acid to the second solution in order to adjust the prepared second solution to have a final total volume.

In addition, if desired, as shown in Fig. 2, an "anode dissolution aging bath" or a "cathode dissolution aging bath" may also be provided for subjecting the first solution prepared in the dissolution bath to deaerating treatment. Moreover, an "anode solution adjustment bath" or a "cathode solution adjustment bath" may also be provided for final fine adjustment of the total volume of the vanadium electrolytic solution or the valence of the vanadium ions. Further, a "pure water storage bath" may also be provided for supplying pure water to the dissolution bath.

The pre-electrolysis device illustrated in Fig. 2 includes a "first electrolysis stack" connected to an anode electrolysis bath and a "second electrolysis stack" connected to a cathode electrolysis bath. The first electrolysis stack is an electrolysis stack for subjecting the first solution to electrolysis for oxidation therein by circulating the first solution for an anode in the anode electrolysis bath so as to make quadrivalent vanadium ions into pentavalent vanadium ions. The first electrolysis stack is a configuration necessary for subjecting the first solution for an anode to electrolysis for oxidation. It should be noted that an "electrolysis stack" refers to a stack in which a plurality of unit cells, each provided with a partition and an electrode, are overlaid with each other. For example, a cell may be illustrated in which a positive electrode cell, a negative electrode cell and an ion-exchange membrane arranged between the positive electrode cell and the negative electrode cell are provided.

On the other hand, the second electrolysis stack is provided for subjecting the first solution for a cathode to electrolysis for reduction. The first solution for a cathode containing quadrivalent vanadium ions is subjected to electrolysis for reduction to obtain trivalent or bivalent vanadium ions.

The pre-electrolysis device is not particularly limited in terms of the form thereof, as long as it is capable of adding sulfuric acid to the first solution for an anode or cathode while pre-electrolyzing the first solution. Accordingly, the device may assume the device form shown in Fig. 2 or it may only include the anode electrolysis bath without the first electrolysis stack. In addition, one or more baths selected from the dissolution bath, the electrolysis bath (anode electrolysis bath or cathode electrolysis bath) and the aging bath (anode solution aging bath or cathode solution aging bath) may be used in common, or all baths may be used in common as a single bath.

By means of such method and device, a high-energy density vanadium electrolytic solution containing a high concentration of vanadium ions, which could not conventionally be prepared, can be produced, and also a vanadium electrolytic solution which can be used in a circulation-type redox flow battery or a non-circulation-type redox non-flow battery, and in which sludge is unlikely to be generated, can be produced.

It should be noted that, in the present application, the expression "vanadium ion solution" is used when the valence of the vanadium ion is focused on and the expression "vanadium electrolytic solution" is used so as to mean a charging-discharging fluid used in a secondary battery. The vanadium electrolytic solution prior to pre-electrolysis may be referred to as an "electrolyte to be electrolyzed." In addition, the "target fluid volume" refers to a fluid volume to be obtained and the "target concentration" refers to a concentration to be achieved. The "crystal water volume" refers to a volume of hydrate contained in the vanadium oxide sulfate hydrate. The "preparation water" or the "preparation sulfuric acid" refers to water or sulfuric acid to be added in order to reach the target fluid volume.

Hereinafter, the respective processes configuring the method for producing a vanadium electrolytic solution and the baths and devices applied in the corresponding processes will be described.

### <First solution preparation process>

The first solution preparation process is a process in which a first solution is prepared by mixing vanadium salt and preparation water so that the vanadium salt is dissolved therein. In particular, as illustrated in Fig. 2, pure water stored in the pure water storage bath is added to the dissolution bath. The vanadium salt is added to the pure water so that the vanadium salt is dissolved therein. At this time, the vanadium salt may be added to the pure water or the pure water may be added to the vanadium salt. In general, the vanadium salt is added while agitating the pure water so that the vanadium salt is dissolved therein. The pure water is stored, for example, in the pure water storage bath of Fig. 2.

The volume of pure water to be added is set in an arbitrary manner, depending on the sulfuric acid concentration of the vanadium electrolytic solution to be obtained. For example, for making the sulfuric acid concentration of the vanadium electrolytic solution be, for example, approximately 2.5 mol/L, the volume of sulfuric acid to be added during preparation of the second solution is not so large. Therefore, it is preferable for the volume of pure water to be added to be within the range of from approximately 50 % to approximately 85 % of the target fluid volume. On the other hand, for making the sulfuric acid concentration of the vanadium electrolytic solution be, for example, approximately 4.0 mol/L, the volume of sulfuric acid to be added during preparation of the second solution is large. Therefore, it is preferable for the volume of pure water to be added to be within the range of from approximately 50 % to approximately 80 % of the target fluid volume. It should be noted that water such as pure water or the like is as has been described in the "High-concentration vanadium electrolytic solution and method for producing the same" section and thus, the description thereof will be omitted here.

The total amount of vanadium salt is preferably added. As for vanadium salt, for example, vanadium oxide sulfate hydrate may be used. The vanadium salt is weighed, by taking the crystal water volume thereof into consideration, so as to have an amount that achieves a target concentration (in molar number), which is within the range of from over 1.7 mol/L to 3.5 mol/L, at the target fluid volume, and such amount is added. The weighed vanadium salt is added, for example, into the dissolution bath in Fig. 2. It should be noted that the vanadium salt is as has been described in the "High-concentration vanadium electrolytic solution and method for producing the same" section and thus, the description thereof will be omitted here.

The feature of the first solution preparation process lies in the point that the vanadium salt is dissolved in water, rather than the vanadium salt being dissolved in the sulfuric acid solution as is conventionally done. As a result, it is possible to dissolve a large amount of vanadium salt for preparing a high vanadium ion concentration in the range of from over 1.7 mol/L to 3.5 mol/L without reaching the solubility limit thereof with respect to water. On the other hand, since vanadium salt is conventionally dissolved in a sulfuric acid solution, the upper limit of the solubility limits of vanadium salt with respect to the sulfuric acid solution corresponds to an amount for preparing a vanadium ion concentration of 1.7 mol/L or less. Accordingly, it was not possible to dissolve vanadium salt in a sulfuric acid solution so as to prepare a vanadium ion concentration that exceeded 1.7 mol/L.

The first solution dissolved in the dissolution bath is a solution in which the total volume of vanadium salt is dissolved in the preparation water and it is prepared such that the fluid volume thereof is less than the target fluid volume. The solution has a transparent, dark-blue color.

It should be noted that, in the production device shown in Fig. 2, the pure water storage bath is provided with a nitrogen bubbling means (NB1) and a nitrogen purging means (NP1). The nitrogen purging means is a means for letting out nitrogen gas inside the bath which is kept at the atmospheric pressure or a slightly pressurized condition (approximately 1.2 atmospheric pressures). It should be noted that other inert gases, such as argon or the like, may be used instead of nitrogen. In addition, in the production device shown in Fig. 2, the dissolution bath is provided with an agitator, a slot for adding vanadium salt, a nitrogen purging means (NP2) and the like, and it may also be provided with a nitrogen bubbling means, if so desired.

In the example of Fig. 2, the first solution prepared in the dissolution bath is delivered to an anode dissolution aging bath and a cathode dissolution aging bath, respectively, as a first solution for an anode and a first solution for a cathode. In the respective aging baths, the first solutions are deaerated to a desired dissolved oxygen concentration. The deaerated first solution is delivered to an anode electrolysis bath for preparing a second solution. The anode dissolution aging bath and the cathode dissolution aging bath are respectively provided with a nitrogen bubbling means (NB2, NB3), a nitrogen purging means (NP3, NP4) and the like.

### <Second solution preparation process>

The second solution preparation process is a process in which a second solution is prepared by adding sulfuric acid to the first solution while pre-electrolyzing the first solution. The feature of the second solution obtained in this process lies in the point that, despite the fact that it is a sulfuric acid solution containing vanadium ions at a high concentration in the range of from over 1.7 mol/L to 3.5 mol/L, no vanadium salt precipitate is generated. On the other hand, when sulfuric acid is added, in a gradual manner, without pre-electrolyzing the first solution, vanadium oxide sulfate, which is vanadium salt dissolved in water, precipitates. The reason therefor is not clear at the present moment; however, it is considered to be due to the solubility limits of vanadium salt with respect to the sulfuric acid solution added with sulfuric acid.

### (Pre-electrolysis)

Pre-electrolysis is performed for both the first solution for an anode and the first solution for a cathode. In the example of Fig. 2, such pre-electrolysis is performed when the first solution for an anode, which is delivered from the anode dissolution aging bath to the anode electrolysis bath, circulates between the anode electrolysis bath and the first electrolysis stack. In addition, such pre-electrolysis is performed when the first solution for a cathode, which is delivered from the cathode dissolution aging bath to the cathode electrolysis bath, circulates between the cathode electrolysis bath and the second electrolysis stack. As shown in Fig. 2, the anode electrolysis bath and the cathode electrolysis bath are respectively provided with an agitator, a slot for adding sulfuric acid, a nitrogen purging means (NP5, NP6) and the like, and they may also be provided with a nitrogen bubbling means, if so desired.

In the circulation path, a sensor (S1, S2), such as an electrode potential (ORP) meter, a pH sensor or the like, is provided. The electrode potential meter measures electrode potential of the first electrolysis stack and the second electrolysis stack at regular time intervals or in real time so as to determine whether or not predetermined potential has been reached for adding sulfuric acid. Such electrode potential (ORP) meter is a measuring device that carries out measurement using a silver-silver chloride electrode as a reference electrode.

As shown in Fig. 2, the first electrolysis stack is a stack in which a plurality of unit cells for subjecting the first solution for an anode to electrolysis for oxidation are overlaid with each other. The first solution for an anode circulates between the anode electrolysis bath and the first electrolysis stack by entering from one end of the first electrolysis stack, in which the unit cells are overlaid with each other, and exiting from the other end thereof. In the first electrolysis stack, electrolysis for reduction is also performed simultaneously; however, such electrolysis for reduction may be performed with respect to the first solution for a cathode (see Fig. 2) or with respect to a solution for electrolysis such as sulfuric acid and sodium sulfate (not shown). Such solution for electrolysis circulates by entering from the other end of the first electrolysis stack, in which the unit cells are overlaid with each other, and exiting from the one end thereof. It should be noted that when the electrolysis for the reduction at the first electrolysis stack is to be performed with the first solution for a cathode, this is more preferable since the electrolysis for the reduction of the first solution for a cathode can be performed at the same time as the electrolysis for the oxidation of the first solution for an anode.

As shown in Fig. 2, the second electrolysis stack is a stack in which a plurality of unit cells for subjecting the first solution for a cathode to electrolysis for reduction are overlaid with each other. The first solution for a cathode circulates between the cathode electrolysis bath and the second electrolysis stack by entering from one end of the second electrolysis stack, in which the unit cells are overlaid with each other, and exiting from the other end thereof. In the second electrolysis stack, electrolysis for oxidation is also performed simultaneously; however, such electrolysis for oxidation may be performed with respect to a solution for electrolysis such as sulfuric acid and sodium sulfate as shown in Fig. 2. Such solution for electrolysis circulates by entering from the other end of the second electrolysis stack, in which the unit cells are overlaid with each other, and exiting from the one end thereof.

The electrolysis for reduction at the second electrolysis stack may be performed simultaneously with the electrolysis for the reduction at the first electrolysis stack. In this case, the electrical quantity for performing oxidation of a quadrivalent to a pentavalent and the electrical quantity for performing reduction of a quadrivalent to a trivalent are simultaneously applied in the first electrolysis stack and the second electrolysis stack, respectively. For this reason, the first solution for a cathode is applied with a sufficient electrical quantity to enable reduction from a quadrivalent to a bivalent, and thus, it is possible to oxidize a quadrivalent vanadium ion to a pentavalent vanadium ion by means of the first electrolysis stack, as well as to reduce a quadrivalent vanadium ion to a bivalent vanadium ion by means of the first electrolysis stack and the second electrolysis stack.

Pre-electrolysis is applied, prior to adding sulfuric acid, to each of the first solution of the anode electrolysis bath and the first solution of the cathode electrolysis bath. The pre-electrolysis may be constant-current electrolysis or potentiostatic electrolysis; however, generally, constant-current electrolysis is preferably applied.

In the case of constant-current electrolysis, the current is preferably within the range of from 1 mA/cm² to 5 mA/cm², inclusive, and more preferably within the range of from 2 mA/cm² to 4 mA/cm², inclusive. It should be noted, however, that in the case of potentiostatic electrolysis, the voltage is preferably adjusted such that the current value determined by an ammeter falls within the above-described range of from 1 mA/cm² to 5 mA/cm², inclusive, preferably within the above-described range of from 2 mA/cm² to 4 mA/cm², inclusive.

During the addition of sulfuric acid, the current value in the constant-current electrolysis or the voltage value in the potentiostatic electrolysis may be a constant (one step) current value or voltage value, or alternatively, a current value or voltage value with two or more steps. In addition, the constant-current electrolysis and the potentiostatic electrolysis may be performed in an alternating manner. When the constant-current electrolysis and the potentiostatic electrolysis have two or more steps, the current or voltage may be applied in a step-wise manner such that the value thereof gradually increases within the above-described ranges; however, the constant current value or constant voltage value may be increased or decreased, and thus, no limitation is given in this regard.

### (Pre-electrolysis of vanadium electrolytic solution for an anode)

The electrode potential of the pre-electrolysis (reference electrode: a silver-silver chloride electrode) at the time of starting to add the sulfuric acid is preferably within the range of from 800 mV to 950 mV, inclusive when the vanadium electrolytic solution for an anode is prepared and electrolysis for oxidation is performed. By starting to add sulfuric acid when the electrode potential is within this range, the generation of precipitate or sludge can be suppressed. The precipitate that is likely to be generated at this time is vanadium oxide sulfate or the like, due to oversaturation, and the sludge that is likely to be generated at this time is vanadium peroxide, vanadium oxide or the like, due to electrolysis for oxidation.

When the electrode potential at the time of starting to add sulfuric acid is less than 800 mV, vanadium oxide sulfate precipitates when sulfuric acid is added. Such precipitate of vanadium oxide sulfate does not dissolve thereafter. From the viewpoint of the solubility limits of vanadium salt with respect to the sulfuric acid solution added with sulfuric acid, the solubility does not change, regardless of whether the electrode potential is 800 mV or more, or below 800 mV; however, the reason why the precipitate is generated below 800 mV (low electric field) and is not generated at 800 mV or more (high electric field) is not clear at the present moment. However, it is considered that, by being applied with an electric field of approximately 800 mV or more, the precipitation of the vanadium ions or complex ions thereof contained in the first solution is suppressed.

The preferred potential, when starting to add sulfuric acid in the range of from 800 mV to 950 mV, inclusive, slightly varies depending on the vanadium ion concentration or the like, and thus, it is not particularly limited. For example, when the vanadium ion concentration is 2.5 mol/L, it is preferable to start addition at a potential in the range of from over 800 mV to 900 mV. For example, when the vanadium ion concentration is 3.5 mol/L, it is preferable to start addition at a potential in the range of from over 850 mV to 950 mV.

The timing for starting to add sulfuric acid may be determined based on the condition of the first solution. For example, it is preferable to start adding sulfuric acid when a small amount of black paste-like floating matter starts to show in the first solution in the process of pre-electrolyzing the first (blue) solution for an anode. The timing when such floating matter starts to show is, for example, when the potential is approximately 815 mV for the vanadium ion concentration of 2.5 mol/L, and is, for example, when the potential is approximately 900 mV for the vanadium ion concentration of 3.5 mol/L. Such floating matter disappears by adding sulfuric acid. It should be noted that if sulfuric acid is not added even when such floating matter starts to show, then such floating matter becomes precipitate, which is difficult to be re-dissolved. Such floating matter becomes completely solid precipitate when the potential exceeds 950 mV and then the pre-electrolysis becomes impossible. In other words, in the case of a low electric field of less than 800 mV, the addition of sulfuric acid causes the generation of precipitate; however, in the case of a high electric field of 800 mV or more, the generation of precipitate occurs unless sulfuric acid is added. By controlling such phenomena, the second solution having a high vanadium ion concentration can be prepared.

It is preferred that sulfuric acid is added in small volumes. The addition volume thereof differs depending on the final sulfuric acid concentration and thus, it is not particularly limited; however, it is preferred that the total volume of sulfuric acid addition is divided into the range of from a few portions to a few dozen portions, wherein one such portion may be considered as an addition volume. For example, when adding 200 mL of sulfuric acid (concentrated sulfuric acid) in ten portions, it is preferable to add a portion of 20 mL, for example, at five-minute intervals over 50 minutes. The addition intervals for predetermined volumes are also arbitrary. In addition, small portions may be added in a continuous manner.

It is preferable for the temperature of the solution, when sulfuric acid is being added, to not be kept so high. For example, it is preferable for the temperature of the solution to be kept at approximately 35 °C or below. Addition of sulfuric acid, while keeping the temperature of the solution within this temperature range, prevents rapid oxidation and thus, the generation of sludge or the like may be suppressed. It should be noted that if a large volume of sulfuric acid is added in a rapid manner, heat is generated and local increase in the temperature (for example, 50 °C or more) of the solution occurs, and thus, sludge such as vanadium oxide or the like may be generated. The generated sludge does not dissolve thereafter and thus, the electrolyte becomes unusable.

Sulfuric acid is weighed so as to have a volume necessary for the final vanadium ion concentration to fall within the range of from 0.5 mol/L to 4 mol/L, inclusive. For sulfuric acid, either concentrated sulfuric acid or a sulfuric acid solution diluted with water as necessary may be provided. When the volume of the first solution is, for example, 80 % of the target fluid volume, sulfuric acid or a sulfuric acid solution having a volume of approximately 10 to 25 % of the target fluid volume may be provided, and such sulfuric acid or sulfuric acid solution is added, in small portions, to the first solution while agitating and pre-electrolyzing the first solution. In this way, the second solution is prepared. It should be noted that the provided sulfuric acid or sulfuric acid solution is preferably deaerated in advance and is removed of the dissolved oxygen as much as possible.

The addition of sulfuric acid, which is started at a potential in the range of from 800 mV to 950 mV, inclusive, ends generally at electrode (a silver-silver chloride electrode reference) potential of approximately 1,000 mV; however, the potential is not particularly limited thereto. It should be noted that the second solution for an anode after the addition of sulfuric acid has a yellow color.

The second solution is obtained by completing the addition of sulfuric acid, which is started at a predetermined potential, while pre-electrolyzing the first solution. The second solution can be charged thereafter. For example, the second solution for an anode may be charged to from 1200 mV to 1250 mV (silver-silver chloride electrode reference) and oxidation to pentavalent vanadium ions may be possible. The second solution for a cathode may be charged to from -400 mV to -300 mV (silver-silver chloride electrode reference) and oxidation to bivalent vanadium ions may be possible.

During the charging at the above-described time, it is preferred that a current density at a comparable level with the current density applied during the pre-electrolysis is applied without any interruption. By performing electrolysis without any interruption, the initial charging (the first charging) of the vanadium electrolytic solution can be done under a condition in which the generation of sludge or the like is suppressed. It should be noted that, once the vanadium electrolytic solution is fully charged, the generation of sludge therein can be suppressed even when it is charged with a significantly high current density. Such current density is within the range of from 10 mA/cm² to 80 mA/cm², inclusive, or preferably within the range of from 20 mA/cm² to 70 mA/cm², inclusive.

As described above, in the second solution preparation process, by adding sulfuric acid while performing pre-electrolysis, a second solution, being a high-concentration vanadium ion solution, can be prepared without generating any precipitate. The obtained second solution can be charged with a high current density without generating any sludge.

### (Pre-electrolysis of vanadium electrolytic solution for a cathode)

When preparing a vanadium electrolytic solution for a cathode (second solution for a cathode), it is also preferred that the first solution is pre-electrolyzed. However, for the preparation of the second solution for a cathode, it is sufficient to add sulfuric acid to the first solution for a cathode while pre-electrolyzing such first solution, and the potential when starting the addition of sulfuric acid is not as strict as in the case for pre-electrolyzing the first solution for an anode as described above. This is because the generation of precipitate and sludge that influences the electrode potential is unlikely to occur as compared to the case for the first solution for an anode.

It is convenient that, as described above, the pre-electrolysis of the first solution for a cathode is performed simultaneously with the pre-electrolysis of the first solution for an anode by means of the first electrolysis stack and the second electrolysis stack. The electrode (reference electrode: silver-silver chloride electrode) potential at the time of the pre-electrolyzing the first solution for a cathode is not particularly limited; however, generally, it is preferably performed in the range of from 200 mV to -200 mV, inclusive.

Through such pre-electrolysis, a second solution for a cathode containing vanadium ions in the range of from over 1.7 mol/L, which is higher than the solubility limit of vanadium oxide sulfate salt with respect to the sulfuric acid solution, to 3.5 mol/L can be prepared. It should be noted that, prior to adding sulfuric acid, the first solution for a cathode is sludgy and thus, the viscosity thereof is high; however, the viscosity decreases once sulfuric acid is added.

### (Others)

An additive for suppressing the generation of precipitate or sludge may be added to the first solution or to the second solution. In addition, the preparation of the first solution and the preparation of the second solution may preferably be performed while applying means for removing dissolved oxygen as much as possible.

The prepared second solution for an anode is transported to an anode solution aging bath shown in Fig. 2 and the second solution for a cathode is transported to a cathode solution aging bath shown in Fig. 2. At the anode solution aging bath and the cathode solution aging bath, the second solution is deaerated to a desired dissolved oxygen concentration, as needed, and the deaerated second solution is delivered to an anode solution adjustment bath (see Fig. 2) and a cathode solution adjustment bath (see Fig. 2), as needed, in order to prepare the final vanadium electrolytic solution. The anode solution aging bath and the cathode solution aging bath are respectively provided with a nitrogen bubbling means (NB4, NB5), a nitrogen purging means (NP8, NP9), or the like.

### <Vanadium electrolytic solution preparation process>

The vanadium electrolytic solution preparation process is a process provided as needed. This preparation process is (A) a process of, when the second solution is not prepared so as to have a final target fluid volume, obtaining a vanadium electrolytic solution by adding preparation water or preparation sulfuric acid to the second solution so that the volume thereof is adjusted to be a final total volume or (B) a process of obtaining a vanadium electrolytic solution by adjusting the valence of the vanadium ions in the second solution, if necessary.

The fluid volume preparation process (A) is a process provided as needed. If, in the first solution preparation process and the second solution preparation process, the final target fluid volume for the vanadium electrolytic solution is obtained, this process is unnecessary. Accordingly, there is no need to add preparation water or preparation sulfuric acid and the second solution itself can be used as the vanadium electrolytic solution.

When the second solution fails to meet the target liquid volume, the preparation water or preparation sulfuric acid is added: such that the vanadium ion concentration is at a target concentration within the range of from over 1.7 mol/L to 3.5 mol/L; and such that the sulfuric acid concentration is at a target concentration within the range of from 0.5 mol/L to 4 mol/L, inclusive. The concentration of the preparation sulfuric acid is preferably prepared such that the target concentrations can be prepared.

The valence preparation process (B) is also a process provided as needed. When the second solution is not fully charged to have pentavalent vanadium ions or bivalent vanadium ions, and thus, when valence adjustment of the vanadium ions is unnecessary, the second solution itself is used as the vanadium electrolytic solution. Here, the valence adjustment refers to a preparation for reducing part of the pentavalent vanadium ions in the vanadium electrolytic solution to quadrivalent vanadium ions or a preparation for oxidizing part of the bivalent vanadium ions in the vanadium electrolytic solution to trivalent or quadrivalent vanadium ions. These preparations are preferably applied when there is a need for a preparation for reducing part of the pentavalent vanadium ions in the second solution, which is in a fully charged condition or near-fully charged condition, to quadrivalent vanadium ions or a preparation for oxidizing part of the bivalent vanadium ions in the vanadium electrolytic solution to trivalent or quadrivalent vanadium ions.

In particular, for example, when an electrolysis process is performed in which quadrivalent vanadium ions are oxidized to pentavalent vanadium ions, subsequent to the pre-electrolysis in the second solution preparation process, a predetermined volume of the electrolyte containing bivalent or trivalent vanadium ions, which is contained in the cathode solution aging bath, is transported to the anode solution adjustment bath, and the pentavalent vanadium ion solution and the bivalent or trivalent vanadium ion solution are mixed therein. In this way, the pentavalent vanadium ions are reduced and the vanadium electrolytic solution for an anode containing quadrivalent vanadium ions may be obtained.

In addition, for example, when an electrolysis process is performed in which quadrivalent vanadium ions are reduced to bivalent or trivalent vanadium ions, subsequent to the pre-electrolysis in the second solution preparation process, a predetermined volume of the electrolyte containing pentavalent vanadium ions, which is contained in the anode solution aging bath, is transported to the cathode solution adjustment bath, and the bivalent or trivalent vanadium ion solution and the pentavalent vanadium ion solution are mixed therein. In this way, the bivalent or trivalent vanadium ions are oxidized and the vanadium electrolytic solution for an cathode containing trivalent or quadrivalent vanadium ions may be obtained.

As described above, according to the method and device for producing a high-concentration vanadium electrolytic solution of the present invention, it is possible to produce a high-concentration vanadium electrolytic solution, which could not conventionally be obtained, by adding sulfuric acid while performing pre-electrolysis. In particular, the vanadium electrolytic solution for an anode can be a vanadium electrolytic solution without any precipitate being generated by starting to add sulfuric acid after reaching a predetermined potential. In such vanadium electrolytic solution for an anode and a cathode thus obtained, the generation of sludge, such as vanadium peroxide, vanadium oxide or the like, can be suppressed even when charging and discharging are performed thereafter through electrolysis for oxidation or electrolysis for reduction.

The produced vanadium electrolytic solution may be subsequently electrolyzed and charged or may be stored as is.

### <Electrolysis process for charging>

The electrolysis process for the charging is a process which is applied in an arbitrary manner and is a process for charging the vanadium electrolytic solution for an anode or a cathode prepared as described above. In particular, for example, in this process, a vanadium electrolytic solution containing pentavalent vanadium ions is obtained by subjecting the pre-electrolyzed second solution for an anode to electrolysis for oxidation, or a vanadium electrolytic solution containing bivalent vanadium ions is obtained by subjecting the pre-electrolyzed second solution for a cathode to electrolysis for reduction.

During the charging at the above-described time, it is preferred that a current density at a comparable level with the current density applied during the pre-electrolysis is applied without any interruption. By performing electrolysis for charging without any interruption, the initial charging (the first charging) of the vanadium electrolytic solution can be done under a condition in which the generation of sludge or the like is suppressed. It should be noted that, once the vanadium electrolytic solution is fully charged, when it is discharged once or when it is re-charged after the valence adjustment, the generation of sludge therein can be suppressed even when it is re-charged with a significantly high current density. Such current density is within the range of from 10 mA/cm² to 100 mA/cm², inclusive, or preferably within the range of from 20 mA/cm² to 70 mA/cm², inclusive.

In this electrolysis process, any of a constant-current electrolysis process, a potentiostatic electrolysis process or a compound electrolysis process having a constant-current electrolysis process and a potentiostatic electrolysis process, which is performed after the constant-current electrolysis process, may be applied. The electrolysis means for caring out such constant-current electrolysis, potentiostatic electrolysis or compound electrolysis is not particularly limited and various means may be applied. For example, oxidation and reduction may be performed by applying a constant current, by applying a constant voltage, or by first performing the electrolysis with a constant current and then with a constant voltage. In addition, two or more constant currents or constant voltages, which are increased in a step-wise manner, may be applied in a sequential manner.

Such electrolysis for charging may be performed by making use of the anode electrolysis bath, the cathode electrolysis bath, the first electrolysis stack and the second electrolysis stack shown in Fig. 2, or may be performed at a dedicated electrolysis for charging device which is not shown.

### Examples

Hereinafter, the present invention will be more specifically described through the provision of examples. However, the present invention is not limited by the examples described below.

### [Example 1]

By making use of the device for producing a vanadium electrolytic solution shown in Fig. 2, 0.5 L of a vanadium electrolytic solution for an anode having a vanadium ion concentration of 2.5 mol/L and 0.5 L of a vanadium electrolytic solution for a cathode having a vanadium ion concentration of 2.5 mol/L were respectively produced. First, 582 g (equivalent to 2.5 mol/L) of vanadium oxide sulfate (IV) hydrate having a purity of 99.5 mass% or more and 150 mL (equivalent to 2.8 mol/L) of concentrated sulfuric acid having a specific gravity of 1.8 were provided. 650 mL of preparation water from the pure water storage bath was poured into the dissolution bath and 582 g of vanadium oxide sulfate hydrate was added, agitated and dissolved therein to prepare a first solution.

Next, two halves of the first solution in the dissolution bath were respectively transported to the anode dissolution aging bath and the cathode dissolution aging bath, and they were subjected to deaeration treatment through nitrogen-gas bubbling so as to control the dissolved oxygen in the respective solutions within the upper limit of 5 ppm. Thereafter, the first solution was transported from the anode dissolution aging bath to the anode electrolysis bath and from the cathode dissolution aging bath to the cathode electrolysis bath. The pre-electrolysis, being electrolysis for oxidation, was performed while circulating the first solution in the anode electrolysis bath through the first electrolysis stack. On the other hand, pre-electrolysis, being electrolysis for reduction, was performed while circulating the first solution in the cathode electrolysis bath through the first electrolysis stack and the second electrolysis stack. In addition, a sodium sulfate solution within a sodium sulfate bath was circulated through the second electrolysis stack. While in circulation, pre-electrolysis was performed in the first electrolysis stack and the second electrolysis stack and thus, electrolysis for oxidation for oxidizing quadrivalent vanadium ions to pentavalent vanadium ions and electrolysis for reduction for reducing quadrivalent vanadium ions to bivalent or trivalent vanadium ions were conducted simultaneously. Both electrolysis for oxidation and electrolysis for reduction were performed at a constant current density of 2 mA/cm² and the electrode (reference electrode: silver-silver chloride electrode) potential at that time was monitored.

During pre-electrolyzing of the first solution for an anode, when the monitored electrode potential exceeded 800 mV and reached approximately 820 mV, 15 mL of concentrated sulfuric acid was added ten times over approximately ten minutes (i.e. a total volume of 150 mL) to the anode electrolysis bath. The potential as at the end of the additions was approximately 950 mV. In this way, the second solution for an anode was prepared.

On the other hand, during pre-electrolyzing of the first solution for a cathode, when the monitored electrode potential dropped below 200 mV and reached approximately 150 mV, 15 mL of concentrated sulfuric acid was added ten times over ten minutes (i.e. a total volume of 150 mL) to the cathode electrolysis bath. The potential as at the end of the additions was approximately 150 mV. In this way, the second solution for a cathode was prepared. It should be noted that, when sulfuric acid was added to the first solution for a cathode in the course of electrolysis for reduction to the negative side, the electrode potential transitioned to the positive side, and thus, as described above, the electrode potential as at the end of the sulfuric acid additions remained substantially the same as that seen as at the start of the sulfuric acid additions.

Thereafter, the pre-electrolysis at a current density of 2 mA/cm² was continued. It was continued until the electrode potential reached 1,250 mV for the vanadium electrolytic solution for an anode and it was also continued until the electrode potential reached -350 mV for the vanadium electrolytic solution for a cathode. Ultimately, the initially charged vanadium electrolytic solution, which contains pentavalent vanadium ions and the initially charged vanadium electrolytic solution, which contains bivalent vanadium ions, were prepared. The prepared vanadium electrolytic solutions were respectively transported to the anode solution aging bath and the cathode solution aging bath. In such anode solution aging bath and cathode solution aging bath, a very small volume of preparation water was added to the vanadium electrolytic solutions, in which the initial charge was completed, to obtain a target fluid volume of 0.5 L. In this way, the vanadium electrolytic solutions for an anode and a cathode, both containing vanadium ions at a target concentration of 2.5 mol/L, were obtained simultaneously.

Based on such method for producing a vanadium electrolytic solution, a vanadium electrolytic solution, in which no generation of precipitate or sludge occurred and which had a high concentration of 2.5 mol/L, was obtained. The vanadium electrolytic solution, which had been subjected to the initial charging, could be applied with a high current density of 20 mA/cm² at the time of re-charging subsequent to discharge after the initial charging, and moreover, no precipitate or sludge was generated in such case.

### [Example 2]

The pre-electrolysis and the electrolysis for charging subsequent thereto were performed at a constant current density of 4 mA/cm² in Example 1. Except for this point, the same was applied to Example 2 in order to prepare the vanadium electrolytic solution of Example 2. Based on such method for producing a vanadium electrolytic solution, a vanadium electrolytic solution, in which no generation of precipitate or sludge occurred and which had a high concentration of 2.5 mol/L, was obtained.

### [Example 3]

By making use of the device for producing a vanadium electrolytic solution shown in Fig. 2, 0.5 L of a vanadium electrolytic solution for an anode having a vanadium ion concentration of 3.5 mol/L and 0.5 L of a vanadium electrolytic solution for a cathode having a vanadium ion concentration of 3.5 mol/L were respectively produced. First, 815 g (equivalent to 3.5 mol/L) of vanadium oxide sulfate (IV) hydrate having a purity of 99.5 mass% or more and 200 mL (equivalent to 3.8 mol/L) of concentrated sulfuric acid having a specific gravity of 1.8 were provided. 650 mL of preparation water from the pure water storage bath was poured into the dissolution bath and 815 g of vanadium oxide sulfate hydrate was added, agitated and dissolved therein to prepare a first solution.

Next, as with Example 1, two halves of the first solution in the dissolution bath were respectively transported to the anode dissolution aging bath and the cathode dissolution aging bath, and they were subjected to deaeration treatment through nitrogen-gas bubbling so as to control the dissolved oxygen in the respective solutions within the upper limit of 5 ppm. Thereafter, the first solution was transported from the anode dissolution aging bath to the anode electrolysis bath and from the cathode dissolution aging bath to the cathode electrolysis bath. The pre-electrolysis, being electrolysis for oxidation, was performed while circulating the first solution in the anode electrolysis bath through the first electrolysis stack. On the other hand, pre-electrolysis, being electrolysis for reduction, was performed while circulating the first solution in the cathode electrolysis bath through the first electrolysis stack and the second electrolysis stack. In addition, a sodium sulfate solution within a sodium sulfate bath was circulated through the second electrolysis stack. While in circulation, pre-electrolysis was performed in the first electrolysis stack and the second electrolysis stack and thus, electrolysis for oxidation for oxidizing quadrivalent vanadium ions to pentavalent vanadium ions and electrolysis for reduction for reducing quadrivalent vanadium ions to bivalent or trivalent vanadium ions were conducted simultaneously. Both electrolysis for oxidation and electrolysis for reduction were performed at a constant current density of 2 mA/cm² and the electrode (reference electrode: silver-silver chloride electrode) potential at that time was monitored.

During pre-electrolyzing of the first solution for an anode, when the monitored electrode potential exceeded 850 mV and reached approximately 900 mV, 20 mL of concentrated sulfuric acid was added ten times over approximately ten minutes (i.e. a total volume of 200 mL) to the anode electrolysis bath. The potential as at the end of the additions was approximately 1,000 mV. In this way, the second solution for an anode was prepared.

On the other hand, during pre-electrolyzing of the first solution for a cathode, when the monitored electrode potential dropped below 200 mV and reached approximately 150 mV, 20 mL of concentrated sulfuric acid was added ten times over ten minutes (i.e. a total volume of 200 mL) to the cathode electrolysis bath. The potential as at the end of the additions was approximately 180 mV. In this way, the second solution for a cathode was prepared. Again, when sulfuric acid was added to the first solution for a cathode in the course of electrolysis for reduction to the negative side, the electrode potential transitioned to the positive side, and thus, as described above, the electrode potential (approximately 180 mV) as at the end of the sulfuric acid additions remained substantially the same as the electrode potential (approximately 150 mV) as at the start of sulfuric acid additions.

Thereafter, the pre-electrolysis at a current density of 2 mA/cm² was continued. It was continued until the electrode potential reached 1,250 mV for the vanadium electrolytic solution for an anode and it was also continued until the electrode potential reached -350 mV for the vanadium electrolytic solution for a cathode. Ultimately, the initially charged vanadium electrolytic solution, which contains pentavalent vanadium ions, and the initially charged vanadium electrolytic solution, which contains bivalent vanadium ions, were prepared. The prepared vanadium electrolytic solutions were respectively transported to the anode solution aging bath and the cathode solution aging bath. In such anode solution aging bath and cathode solution aging bath, a very small volume of preparation water was added to the vanadium electrolytic solutions, in which the initial charge was completed, to obtain a target fluid volume of 0.5 L. In this way, the vanadium electrolytic solutions for an anode and a cathode, both containing vanadium ions at a target concentration of 3.5 mol/L, were obtained simultaneously.

Based on such method for producing a vanadium electrolytic solution, a vanadium electrolytic solution, in which no generation of precipitate or sludge occurred and which had a high concentration of 3.5 mol/L, was obtained. The vanadium electrolytic solution, which had been subjected to the initial charging, could be applied with a high current density of 50 mA/cm² at the time of re-charging subsequent to discharge after the initial charging, and again, no precipitate or sludge was generated in such case.

### [Example 4]

The pre-electrolysis and the electrolysis for the charging subsequent thereto were performed at a constant current density of 4 mA/cm² in Example 3. Except for this point, the same was applied to Example 4 in order to prepare the vanadium electrolytic solution of Example 4. Based on such method for producing a vanadium electrolytic solution, a vanadium electrolytic solution, in which no generation of precipitate or sludge occurred and which had a high concentration of 3.5 mol/L, was obtained.

### [Example 5]

By making use of the device for producing a vanadium electrolytic solution shown in Fig. 2, 0.5 L of a vanadium electrolytic solution for an anode having a vanadium ion concentration of 1.8 mol/L and 0.5 L of a vanadium electrolytic solution for a cathode having a vanadium ion concentration of 1.8 mol/L were respectively produced. First, 408 g (equivalent to 1.8 mol/L) of vanadium oxide sulfate (IV) hydrate having a purity of 99.5 mass% or more and 140 mL (equivalent to 2.6 mol/L) of concentrated sulfuric acid having a specific gravity of 1.8 were provided. 850 mL of preparation water from the pure water storage bath was poured into the dissolution bath and 408 g of vanadium oxide sulfate hydrate was added, agitated and dissolved therein to prepare a first solution.

Next, two halves of the first solution in the dissolution bath were respectively transported to the anode dissolution aging bath and the cathode dissolution aging bath, and they were subjected to deaeration treatment through nitrogen-gas bubbling so as to control the dissolved oxygen in the respective solutions within the upper limit of 5 ppm. Thereafter, the first solution was transported from the anode dissolution aging bath to the anode electrolysis bath and from the cathode dissolution aging bath to the cathode electrolysis bath. The pre-electrolysis, being electrolysis for oxidation, was performed while circulating the first solution in the anode electrolysis bath through the first electrolysis stack. On the other hand, pre-electrolysis, being electrolysis for reduction, was performed while circulating the first solution in the cathode electrolysis bath through the first electrolysis stack and the second electrolysis stack. In addition, sodium sulfate within a sodium sulfate bath was circulated through the second electrolysis stack. While in circulation, pre-electrolysis was performed in the first electrolysis stack and the second electrolysis stack and thus, electrolysis for oxidation for oxidizing quadrivalent vanadium ions to pentavalent vanadium ions and electrolysis for reduction for reducing quadrivalent vanadium ions to bivalent or trivalent vanadium ions were conducted simultaneously. Both electrolysis for oxidation and electrolysis for reduction were performed at a constant current density of 2 mA/cm² and the electrode (reference electrode: silver-silver chloride electrode) potential at that time was monitored.

During pre-electrolyzing of the first solution for an anode, when the monitored electrode potential exceeded 800 mV, 14 mL of concentrated sulfuric acid was added ten times over approximately ten minutes (i.e. a total volume of 140 mL) to the anode electrolysis bath. The potential as at the end of the additions was approximately 950 mV. In this way, the second solution for an anode was prepared.

On the other hand, during pre-electrolyzing of the first solution for a cathode, when the monitored electrode potential dropped below 200 mV and reached approximately 150 mV, 14 mL of concentrated sulfuric acid was added ten times over ten minutes (i.e. a total volume of 140 mL) to the cathode electrolysis bath. The potential as at the end of the additions was approximately 180 mV. In this way, the second solution for a cathode was prepared. Again, when sulfuric acid was added to the first solution for a cathode in the course of electrolysis for reduction to the negative side, the electrode potential transitioned to the positive side, and thus, as described above, the electrode potential (approximately 180 mV) as at the end of sulfuric acid addition remained substantially the same as the electrode potential (approximately 150 mV) as at the start of sulfuric acid additions.

Thereafter, the pre-electrolysis at a current density of 2 mA/cm² was continued. It was continued until the electrode potential reached 1,250 mV for the vanadium electrolytic solution for an anode and it was also continued until the electrode potential reached -350 mV for the vanadium electrolytic solution for a cathode. Ultimately, the initially charged vanadium electrolytic solution, which contains pentavalent vanadium ions, and the initially charged vanadium electrolytic solution, which contains bivalent vanadium ions, were prepared. The prepared vanadium electrolytic solutions were respectively transported to the anode solution aging bath and the cathode solution aging bath. In such anode solution aging bath and cathode solution aging bath, a very small volume of preparation water was added to the vanadium electrolytic solutions, in which the initial charge was completed, to obtain a target fluid volume of 0.5 L. In this way, the vanadium electrolytic solutions for an anode and a cathode, both containing vanadium ions at a target concentration of 1.8 mol/L, were obtained simultaneously.

Based on such method for producing a vanadium electrolytic solution, a vanadium electrolytic solution, in which no generation of precipitate or sludge occurred and which had a high concentration of 1.8 mol/L, was obtained. The vanadium electrolytic solution, which had been subjected to the initial charging, could be applied with a high current density of 20 mA/cm² at the time of re-charging subsequent to discharge after the initial charging, and again, no precipitate or sludge was generated in such case.

### [Example 6]

The pre-electrolysis and the electrolysis for the charging subsequent thereto were performed at a constant current density of 4 mA/cm² in Example 5. Except for this point, the same was applied to Example 6 in order to prepare the vanadium electrolytic solution of Example 6. Based on such method for producing a vanadium electrolytic solution, a vanadium electrolytic solution, in which no generation of precipitate or sludge occurred and which had a high concentration of 1.8 mol/L, was obtained.

### [Comparative example 1]

Under the conditions in Example 1, when sulfuric acid was added to each of the first solution for an anode and the first solution for a cathode without performing pre-electrolysis, blue precipitate immediately generated in both first solutions. The electrolytes having precipitate generated therein could not be charged/discharged thereafter.

### [Comparative example 2]

Under the conditions in Example 1, the electrode potential at the time of adding sulfuric acid while pre-electrolyzing the first solution for an anode was set at 750 mV. When the addition of sulfuric acid was started, blue precipitate generated, which was impossible to be re-dissolved and thus, the circulation was not possible.

### [Comparative example 3]

Under the conditions in Example 1, the electrode potential at the time of adding sulfuric acid while pre-electrolyzing the first solution for an anode was set at 1,000 mV. The paste-like floating matter, which generated when the electrode potential exceeded approximately 850 mV, became insoluble sludge and the circulation was not possible.

### [Comparative example 4]

Under the conditions in Example 3, when sulfuric acid was added to each of the first solution for an anode and the first solution for a cathode without performing pre-electrolysis, blue precipitate immediately generated in both first solutions. The electrolytes having precipitate generated therein could not be charged/discharged thereafter.

### [Comparative example 5]

Under the conditions in Example 3, the electrode potential at the time of adding sulfuric acid while pre-electrolyzing the first solution for an anode was set at 780 mV. When the addition of sulfuric acid was started, blue precipitate generated, which was impossible to be re-dissolved and thus, the circulation was not possible.

### [Comparative example 6]

Under the conditions in Example 3, the electrode potential at the time of adding sulfuric acid while pre-electrolyzing the first solution for an anode was set at 1,000 mV The paste-like floating matter, which generated when the electrode potential exceeded approximately 900 mV, became insoluble sludge and the circulation was not possible.

### [Comparative example 7]

Under the conditions in Example 5, when sulfuric acid was added to each of the first solution for an anode and the first solution for a cathode without performing pre-electrolysis, blue precipitate immediately generated in both first solutions. The electrolytes having precipitate generated therein could not be charged/discharged thereafter.

### [Comparative example 8]

Under the conditions in Example 5, the electrode potential at the time of adding sulfuric acid while pre-electrolyzing the first solution for an anode was set at 760 mV. When the addition of sulfuric acid was started, blue precipitate generated, which was impossible to be re-dissolved and thus, the circulation was not possible.

### [Comparative example 9]

Under the conditions in Example 5, the electrode potential at the time of adding sulfuric acid while pre-electrolyzing the first solution for an anode was set at 1,000 mV. The paste-like floating matter, which generated when the electrode potential exceeded approximately 820 mV, became insoluble sludge and the circulation was not possible.

## Claims

1. A vanadium electrolytic solution which is a sulfuric acid solution, comprising vanadium ions in the range of from over 1.7 mol/L to 3.5 mol/L.

2. The vanadium electrolytic solution according to claim 1, wherein the vanadium ions are quadrivalent or pentavalent vanadium ions.

3. The vanadium electrolytic solution according to claim 1 or 2, wherein
the concentration of dissolved oxygen is 5 ppm or less,
vanadium oxide sulfate (VOSO₄·nH₂O) is used as vanadium salt, the vanadium oxide sulfate containing one or more elements among aluminum, calcium, sodium, potassium, iron, silicon and chromium in a total amount of less than 0.4 mass%, or
an additive is contained, the additive being used to suppress generation of precipitate or sludge.

4. The vanadium electrolytic solution according to any one of claims 1 to 3, wherein
a first solution is prepared by mixing the vanadium salt with preparation water in order to dissolve the vanadium salt,
a second solution is prepared by adding sulfuric acid to the first solution while pre-electrolyzing the first solution, and
the vanadium electrolytic solution is either the second solution itself or the second solution prepared by adding preparation water or preparation sulfuric acid to the first solution in order to adjust to a final total volume of the vanadium electrolytic solution.

5. The vanadium electrolytic solution according to claim 4, wherein the pre-electrolysis is constant-current electrolysis or potentiostatic electrolysis.

6. The vanadium electrolytic solution according to claim 4 or 5, wherein, the electrode potential of the pre-electrolysis (reference electrode: a silver-silver chloride electrode) at the time of starting to add the sulfuric acid is within the range of from 800 mV to 950 mV, inclusive when the vanadium electrolytic solution for an anode is prepared and electrolysis for oxidation is performed.

7. A method for producing a vanadium electrolytic solution containing vanadium ions in the range of from over 1.7 mol/L to 3.5 mol/L, the method comprising:
preparing a first solution by mixing vanadium salt with preparation water, in order to dissolve the vanadium salt; and
preparing a second solution by adding sulfuric acid to the first solution while pre-electrolyzing the first solution.

8. The method for producing a vanadium electrolytic solution according to claim 7, wherein
the concentration of dissolved oxygen is 5 ppm or less,
vanadium oxide sulfate (VOSO₄ · nH₂O) is used as vanadium salt, the vanadium oxide sulfate containing one or more elements among aluminum, calcium, sodium, potassium, iron, silicon and chromium in a total amount of less than 0.4 mass%, or
an additive is contained, the additive being used to suppress generation of precipitate or sludge.

9. The method for producing a vanadium electrolytic solution according to claim 7 or 8, wherein the pre-electrolysis is constant-current electrolysis or potentiostatic electrolysis.

10. The method for producing a vanadium electrolytic solution according to any one of claims 7 to 9, wherein, the electrode potential of the pre-electrolysis (reference electrode: a silver-silver chloride electrode) at the time of starting to add the sulfuric acid is within the range of from 800 mV to 950 mV, inclusive when the vanadium electrolytic solution for an anode is prepared and electrolysis for oxidation is performed.

11. A device for producing a vanadium electrolytic solution containing vanadium ions in the range of from over 1.7 mol/L to 3.5 mol/L, the device comprising, at least:
a solution bath in which a first solution is prepared by mixing vanadium salt with preparation water in order to dissolve the vanadium salt and a second solution is prepared by adding sulfuric acid to the first solution while pre-electrolyzing the first solution, and which has the second solution itself as the vanadium electrolytic solution or the second solution prepared by adding preparation water or preparation sulfuric acid to the second solution in order to adjust the volume thereof to be a final total volume as the vanadium electrolytic solution; and
a pre-electrolysis device that is for pre-electrolyzing the first solution.
